Europäisches Patentamt

European Patent Office

Office européen des brevets

(11) Numéro de publication: **0 248 698 B1**

(12) **FASCICULE DE BREVET EUROPEEN**

(45) Date de publication de fascicule du brevet: **28.07.93**　(51) Int. Cl.5: **G02F 1/137**, G02F 1/133

(21) Numéro de dépôt: **87401092.9**

(22) Date de dépôt: **14.05.87**

(54) **Perfectionnements aux dispositifs optiques à cristaux liquides, permettant la mise en oeuvre d'excitations alternatives haute fréquence.**

(30) Priorité: **14.05.86 FR 8606916**

(43) Date de publication de la demande:
**09.12.87 Bulletin 87/50**

(45) Mention de la délivrance du brevet:
**28.07.93 Bulletin 93/30**

(84) Etats contractants désignés:
**AT BE CH DE ES FR GB GR IT LI LU NL SE**

(56) Documents cités:
**GB-A- 1 512 702**
**US-A- 3 675 988**
**US-A- 4 395 467**

**Applied Physics 11, 67-74 (1976), Springer-Verlag, Heidelberg.**

(73) Titulaire: **Etablissement Public dit: CENTRE NATIONAL DE LA RECHERCHE SCIENTIFIOUE (CNRS)**
**15, Ouai Anatole France**
**F-75007 Paris(FR)**

(72) Inventeur: **Germain, Claude**
**20 bis, rue du Parc**
**F-91400 Orsay(FR)**
Inventeur: **Boix, Marguerite**
**rue de la Predecelle**
**F-91460 Vaugrigneuse(FR)**
Inventeur: **Durand, Georges**
**16, rue de Chateaufort**
**F-91400 Orsay(FR)**
Inventeur: **Martinot-Lagarde, Philippe**
**29 ter, avenue Massonat Deroches**
**F-91406 Marcoussis(FR)**
Inventeur: **Monkade, Mohamed Université Paris-Sud**
**Centre d'Orsay Lab.de Physique des Solides Bâtiment 510 F-91505 Orsay(FR)**

(74) Mandataire: **Martin, Jean-Jacques et al**
**Cabinet REGIMBEAU 26, Avenue Kléber**
**F-75116 Paris (FR)**

**Description**

La présente invention concerne les dispositifs optiques utilisant des cristaux liquides.

La présente invention a été faite au Laboratoire de Physique des Solides de l'Université de Paris Sud, laboratoire associé au CNRS N. 04 0002.

De nombreux travaux de recherche ont été conduits depuis au moins une dizaine d'années sur les cristaux liquides.

Ces travaux ont donné lieu à de très nombreuses publications.

On citera par exemple les documents : 1) APPLIED PHYSICS, vol. 11, N. 1, septembre 1976, Springer-Verlag, K. Fahrenshon et al : "Deformation of a Pretilted Nematic Liquid Crystal Layer in an Electric Field", pages 67-74, et 2), JOURNAL OF APPLIED PHYSICS, vol. 47, N.9 septembre 1976, American Institute of Physics, S. Matsumoto et al : "Field-induced deformation of hybrid - aligned nematic liquid crystals : New-multicolor liquid crystal display", pages 3842-3845, qui traitent d'un effet de biréfringence électriquement contrôlée dans les cristaux liquides nématiques, par couplage, dans le volume d'une cellule contenant un matériau cristal liquide, d'un champ électrique appliqué sur la cellule, avec l'anisotropie diélectrique du cristal liquide.

Par ailleurs, différents résultats des travaux de recherche effectués au Laboratoire de Physique des Solides de l'Université de Paris Sud sont décrits dans la demande de brevet français déposée le 28 avril 1982, sous le N. 82 07309 et publiée sous le N. 2 526 177, la demande de brevet français déposée le 23 octobre 1984 sous le N. 84 16192 ou encore la demande de brevet français déposée le 18 juin 1985 sous le N. 85 09224.

L'un des gros inconvénients de la majorité des dispositifs électrooptiques jusqu'ici proposés résulte du fait que leur temps de réponse à une excitation électrique dépasse largement la milliseconde.

On a certes proposé récemment un système qui permet la commutation rapide à la microseconde, dans les cristaux liquides, sur de la lumière polarisée. Il s'agit d'un dispositif qui utilise la ferroélectricité de volume d'un matériau smectique chiral et un ancrage de surface faible. Ce dispositif est décrit dans le document Ferroelectrics 59, 25 (1984) par N. CLARK et S. LAGERWALL.

Néanmoins, ce dispositif bien qu'il autorise un temps de réponse relativement court, présente différents inconvénients, parmi lesquels on citera : la difficulté de travailler par multiplexage, le caractère polaire de l'ancrage, la nécessité de contrôler avec précision la force d'ancrage, la consommation des cellules lorsqu'on utilise un champ électrique alternatif de maintien.

Tenant compte des limites des dispositifs jusqu'ici proposés, les inventeurs se sont donnés pour but de proposer de nouveaux moyens permettant de mettre en oeuvre des excitations électriques haute fréquence, pouvant atteindre plusieurs MHZ, sur des dispositifs électrooptiques à cristaux liquides.

Après de nombreuses études théoriques et constatations expérimentales les inventeurs proposent pour résoudre le problème ainsi posé un procédé de fabrication d'une cellule à cristaux liquides comprenant les étapes qui consistent à placer un cristal liquide nématique entre deux plaques transparentes parallèles revêtues sur leurs faces internes en regard d'un revêtement conducteur formant électrode, et à intercaler une cale entre les plaques, caractérisé par le fait qu'il comprend l'étape additionnelle consistant à modifier l'impédance, de façon contrôlee, en surface de l'un au moins des revêtements formant électrode sur des zones choisies de celui-ci.

Comme cela sera explicité par la suite, les dispositifs électrooptiques ainsi obtenus permettent de générer entre les plaques, un champ électrique divergent et oblique au niveau des zones du revêtement de variation d'impédance contrôlée, et de là, permettent d'obtenir une courbure et une inclinaison du directeur nématique du cristal liquide placé entre les plaques, aptes à produire un effet de biréfringence.

De préférence, le procédé conforme à la présente invention comprend l'étape consistant à appliquer entre les deux électrodes prévues respectivement sur les plaques une tension électrique alternative d'excitation dont la fréquence est alternativement supérieure et inférieure à une fréquence critique d'instabilité définie par la propriété suivante : en considérant un premier point sur une zone de variation d'impédance contrôlée d'un revêtement, un second point sur le même revêtement à l'extérieur de la zone et un troisième point placé sur l'autre revêtement et situé sur une normale aux revêtements passant par le premier point, l'impédance diélectrique, essentiellement capacitive, entre le second et le troisième points est égale à la somme de l'impédance diélectrique entre le troisième et le premier points et de l'impédance du revêtement entre le second et le premier points.

D'autres caractéristiques, avantages et buts de la présente invention apparaîtront à la lecture de la description détaillée qui va suivre et en regard des dessins annexés donnés à titres d'exemples non limitatifs et sur lesquels :

EP 0 248 698 B1

- les figures 1, 2 et 3 représentent trois photographies, avec grossissement d'une cellule conforme à un premier exemple mettant en oeuvre la présente invention, correspondant à une fréquence d'excitation supérieure à la fréquence critique et à des amplitudes d'excitation électrique différentes,
- les figures 4 à 15 représentent les photographies, avec grossissement, d'une autre cellule conforme à un second exemple mettant en oeuvre la présente invention, correspondant à des fréquences d'excitation électrique différentes, et une même amplitude d'excitation,
- la figure 16 illustre schématiquement, et en perspective, une cellule électrooptique conforme à la présente invention,
- la figure 17 illustre schématiquement le processus mis en oeuvre par l'invention sur cette cellule pour l'obtention d'un effet de biréfringence,
- la figure 18 représente différentes courbes illustrant la valeur de la tension d'excitation en fonction de la fréquence d'excitation, correspondant au seuil d'éclairement pour différentes variantes de réalisation de la cellule conforme au premier exemple précité, dont plusieurs photographies sont illustrées en figures 1, 2 et 3,
- la figure 19 illustre schématiquement un revêtement d'électrode obtenu après mise en oeuvre du procédé de préparation conforme à la présente invention,
- la figure 20 représente un exemple de cellule électrooptique conforme à la présente invention,
- la figure 21 illustre schématiquement un mode d'excitation d'un dispositif conforme à la présente invention.

On va tout d'abord expliciter le procédé de préparation d'un dispositif électrooptique à cristaux liquides conforme à la présente invention.

Comme évoqué précédemment, la première étape de ce procédé consiste à préparer deux plaques transparentes parallèles revêtues chacune, sur l'une de leur face, d'un revêtement conducteur formant électrode, en définissant des variations contrôlées d'impédance en surface de l'un au moins des revêtements d'électrode sur des zones choisies de celui-ci.

Par la suite, les deux plaques ainsi préparées sont placées à proximité l'une de l'autre dans une disposition sensiblement parallèle, après avoir intercalé une cale entre les plaques et l'espace délimité par ces deux plaques et la cale est remplie d'une matière qui comprend des molécules douées de propriétés nématiques.

De préférence, les variations contrôlées d'impédance en surface de l'un au moins des revêtements d'électrode sont réalisées par altération de l'impédance intrinsèque du revêtement conducteur formant électrode. Différentes variantes de réalisation peuvent être utilisées pour réaliser cette altération de l'impédance intrinsèque.

Selon une première variante de réalisation on utilise une réaction chimique. L'étape consistant à définir des variations contrôlées d'impédance en surface de l'un au moins des revêtements d'électrode est alors réalisée : 1) en déposant une couche régulière de revêtement conducteur homogène sur l'une des plaques puis 2) en modifiant l'impédance en surface du revêtement sur des zones choisies de celui-ci, par réaction chimique.

Plus précisément encore, selon un mode de réalisation considéré actuellement comme préférentiel de cette première variante, l'étape consistant à définir des variations contrôlées d'impédance en surface de l'un au moins des revêtements d'électrode est réalisé : 1) en déposant une couche régulière d'un revêtement électriquement conducteur d'oxydes d'étain et d'indium (I.T.O), sur l'une des plaques, puis 2) en assurant, par réaction chimique, sur des zones choisies du revêtement, une réduction au moins partielle des oxydes d'étain et d'indium On sait en effet que les oxydes d'étain et d'indium, en principe semiconducteurs, peuvent devenir moins conducteurs et même isolants après réduction chimique.

Pour assurer l'altération de l'impédance intrinsèque du revêtement conducteur formant électrode, on peut encore utiliser une gravure mécanique totale ou partielle en épaisseur. Dans ce cas, l'étape consistant à définir des variatiors contrôlées d'impédance en surface de l'un au moins des revêtements d'électrode est réalisée : 1) en déposant une couche régulière de revêtement conducteur homogène sur l'une des plaques, puis 2) en assurant une gravure mécanique du revêtement sur des zones choisies de celui-ci.

Le cas échéant, les variations contrôlées d'impédance en surface de l'un au moins des revêtements d'électrode peuvent encore être réalisées en déposant, sur des zones choisies du revêtement électriquement conducteur, une couche de recouvrement en un matériau présentant une conductibilité électrique différente de celle du revêtement .

Les variations contrôlées d'impédance en surface de l'un au moins des revêtements d'électrode, précités, peuvent correspondre soit à une variation progressive d'impédance de la périphérie des zones choisies vers le centre de celles-ci, soit à une variation brusque d'impédance lors du franchissement de la délimitation des zones choisies. La largeur de ces zones sera de préférence de l'ordre de grandeur de

3

EP 0 248 698 B1

l'épaisseur de la cellule.

L'homme de l'art comprendra aisément que dans le cas où l'on souhaite obtenir une variation progressive d'impédance de la périphérie des zones choisies vers le centre de celles-ci,on utilisera de préférence une modification de l'impédance en surface du revêtement, par réaction chimique. Par contre, lorsque l'on souhaite obtenir une variation brusque d'impédance lors du franchissement de la délimitation des zones choisies, on utilisera de préférence une gravure mécanique du revêtement ou encore un recouvrement ou remplacement de celui-ci sur les zones choisies.

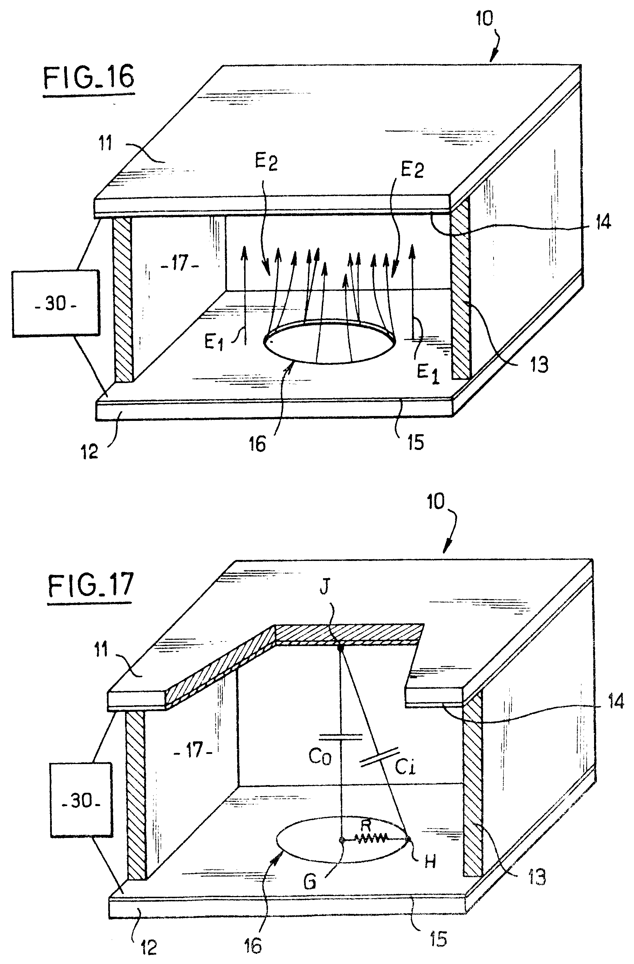

On a illustré schématiquement sur la figure 16 une cellule électrooptique à cristaux liquides ainsi obtenue.

On aperçoit sur cette figure 16, une cellule 10 qui comprend deux plaques transparentes et parallèles 11, 12 de préférence en verre. Une cale 13 est intercalée entre les plaques 11, 12 et définit en coopération avec celles-ci une chambre interne étanche qui contient une matière 17 comprenant des molécules douées de propriétés nématiques. Les plaques 11, 12 sont munies,sur leur surface interne en regard,de revêtements 14,15 respectivement, électriquement conducteurs et transparents formant électrode.

Ces électrodes 14, 15 lorsqu'elles sont reliées aux bornes d'une alimentation électrique schématiquement illustrée sous la référence 30, permettent d'appliquer sur la matière 17, un champ électrique, de valeur contrôlée et d'orientation générale normale aux plaques 11, 12.

On a par ailleurs illustré schématiquement sur la figure 16 une zone 16 sur laquelle on a réalisé une variation contrôlée d'impédance en surface du revêtement 15, par exemple une gravure.

L'électrode 15 possède sur la périphérie de la zone 16 une conductibilité sensiblement homogène et donc une densité de charge sensiblement homogène. Par conséquent, l'application d'une tension électrique d'excitation entre les électrodes 14 et 15 génère sur la périphérie de la zone 16 un champ électrique d'orientation sensiblement homogène normal aux électrodes 14, 15.

Sur la figure 16 ce champ électrique d'orientation normale aux électrodes est illustré schématiquement par les flèches référencées $E_1$.

Par contre, lorsque les moyens d'alimentation 30 fournissent une tension alternative d'excitation dont la fréquence est supérieure à une fréquence critique d'instabilité qui sera explicitée par la suite, au-dessus de la zone 16 qui correspond à une zone de variation contrôlée d'impédance, on obtient un champ électrique divergent et oblique en éloignement de la bordure de la zone 16, comme illustré schématiquement sur la figure 16 par les flèches référencées $E_2$. De là, en utilisant une matière 17 comprenant des molécules douées de propriétés nématiques qui possèdent une forte anisotropie diélectrique, on obtient dans la cellule 10 une inclinaison du directeur nématique au-dessus de la zone 16 précitée. En effet, les molécules douées de propriétés nématiques et possédant une forte anisotropie diélectrique suivent l'orientation du champ oblique $E_2$.

Pour cela, on peut utiliser soit des cristaux liquides nématiques à anisotropie diélectrique positive, tels que les composés cyanobiphényl soit des cristaux nématiques à anisotropie diélectrique négative

Dans le cas d'une anisotropie diélectrique positive, la constante diélectrique dans le sens de l'axe des molécules étant supérieure à la constante diélectrique perpendiculaire à cet axe, les molécules s'orientent parallèlement au champ électrique.

Par contre, dans le cas d'une anisotropie diélectrique négative, la constante diélectrique dans le sens de l'axe des molécules étant inférieure à la constante diélectrique perpendiculairement à cet axe, les molécules s'orientent perpendiculairement au champ électrique.

L'agencement oblique des molécules de cristal liquide forme ainsi un effet de biréfringence visible lorsque la cellule est observée en lumière polarisée entre deux polariseurs croisés, par exemple.

On va maintenant décrire deux exemples expérimentaux réalisés respectivement l'un sur un dispositif électrooptique à cristaux liquides conforme à la présente invention pour lequel l'un des revêtements formant électrode a subi une gravure sur des zones choisies pour définir des variations brusques d'impédance, l'autre sur un dispositif électrooptique à cristaux liquides conforme à la présente invention pour lequel l'un des revêtements a subi un traitement chimique déterminant un gradient d'impédance en surface sur des zones choisies.

EXEMPLE 1

Une première série d'expériences a été réalisée sur une série de cellules comprenant une première plaque 12 recouverte d'un dépôt d'or 15 évaporé sous vide sous incidence oblique (60°) et électriquement conducteur, d'une épaisseur de l'ordre de 70nm, des trous 16 d'un diamètre moyen de l'ordre de 80$\mu$m étant réalisés dans le dépôt d'or à l'aide d'une aiguille, et une seconde plaque 11 comprenant un revêtement 14 d'oxyde d'indium et d'étain et traité au silane homéotrope. Ces cellules étaient remplies d'un

4

cristal liquide du type 5CB. Elles sont observées entre polariseurs croisés.

Plus précisément, les expériences ont été conduites sur plusieurs cellules d'un premier type correspondant à un ancrage faible du cristal liquide et réalisées avec des cales 13 possédant respectivement une épaisseur de 6μm, 20μm et 65μm.

L'ancrage faible du cristal liquide est mis en évidence par le fait que les trous 16 réalisés dans le dépôt d'or 15 ne deviennent pas homéotropes tout de suite mais seulement après au moins 24 heures après le remplissage de la cellule.

D'autres expériences ont été réalisées sur une cellule correspondant à un ancrage fort. L'ancrage fort est mis en évidence par le fait que les trous 16 réalisés dans le dépôt d'or deviennent immédiatemment homéotrope après remplissage de la cellule.

Les expériences réalisées sur les cellules du type ancrage fort, ont été faites uniquement avec une cale 13 présentant une épaisseur de 6μm.

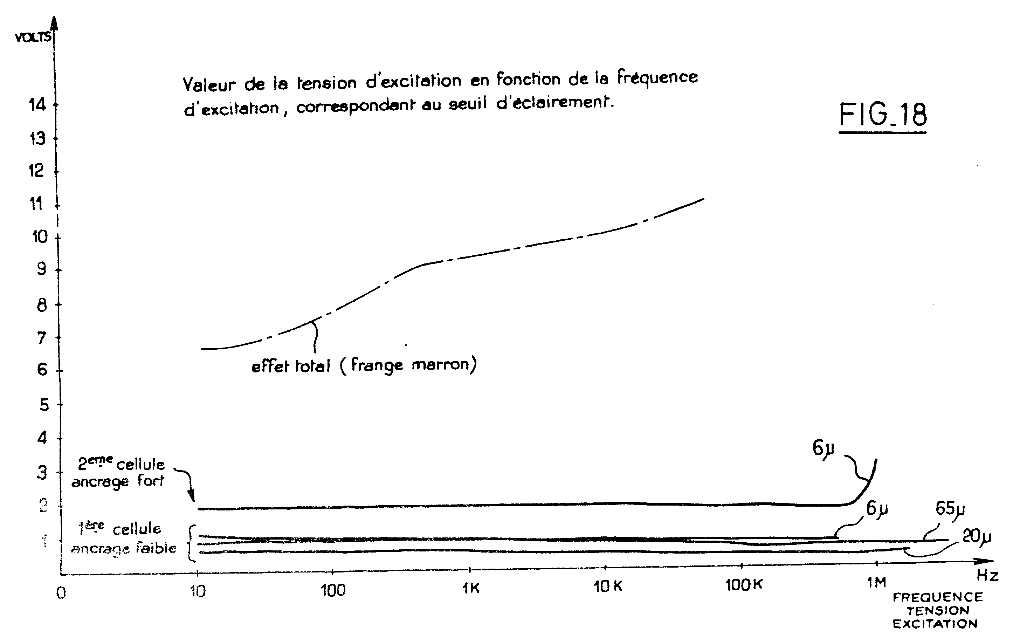

On a mesuré tout d'abord la tension appliquée entre les électrodes de la cellule pour obtenir le seuil d'éclairement des bords des trous 16, en fonction de différentes fréquences d'excitation allant globalement de 10Hz à 1MHz. Les résultats de ces mesures sont illustrés en traits continus sur la figure 18.

On constate à l'examen de cette figure que pour éclairer le bord des trous 16, la tension d'excitation est pratiquement constante pour un même échantillon quelle que soit la fréquence, jusqu'à 700KHz ou 1MHz. La tension varie peu en fonction de l'épaisseur mais elle doit être augmentée (deux fois plus environ) lorsque l'ancrage est fort.

Les expériences ont été poursuivies pour faire apparaître une frange marron, c'est-à-dire utiliser le contraste maximum. Les résultats de ces mesures sont illustrés schématiquement en traits mixtes interrompus sur la figure 18. On constate que pour faire apparaître la frange marron, il faut augmenter progressivement la tension en même temps que la fréquence, pour une même épaisseur.

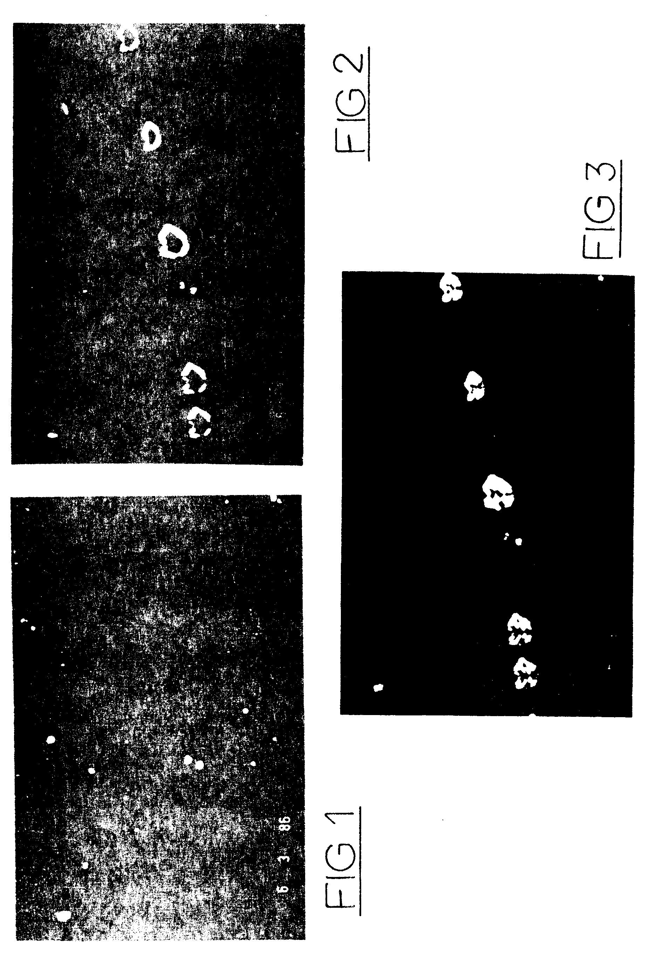

La figure 1 représente une photographie de cette cellule électrooptique à cristaux liquides sans tension d'excitation.

La figure 2 représente une photographie de la même cellule pour une tension d'excitation correspondant au seuil d'éclairement des bords des différents trous 16.

Enfin, la figure 3 représente une photographie de la même cellule après apparition de la frange marron.

## EXEMPLE 2

Pour cette seconde série d'expérimentations on a utilisé des plaques de verre 11, 12 recouvertes d'une couche conductrice d'oxydes d'étain et d'indium (ITO) d'une épaisseur de l'ordre de 25nm.

La cellule d'expérimentation a été préparée comme suit.

Après dégraissage à l'acétone et lavage à l'eau distillée l'une des plaques 12 séchée a été modifiée de la manière suivante.

Une gouttelette de solution acqueuse de potasse à 30 % a été déposée sur la plaque. Puis une lame d'aluminium de 0,01mm d'épaisseur et d'environ 2mm de large a été placée en contact de la couche conductrice d'oxydes d'étain et d'indium. Après environ 2mm de réaction la plaque a été lavée sous eau distillée. Une réduction des oxydes d'étain et d'indium par l' aluminium plus électropositif a ainsi été réalisée. La résistance électrique de la couche d'oxydes d'étain et d'indium recouvrant la plaque a ensuite été mesurée au niveau d'une série de paires de points.

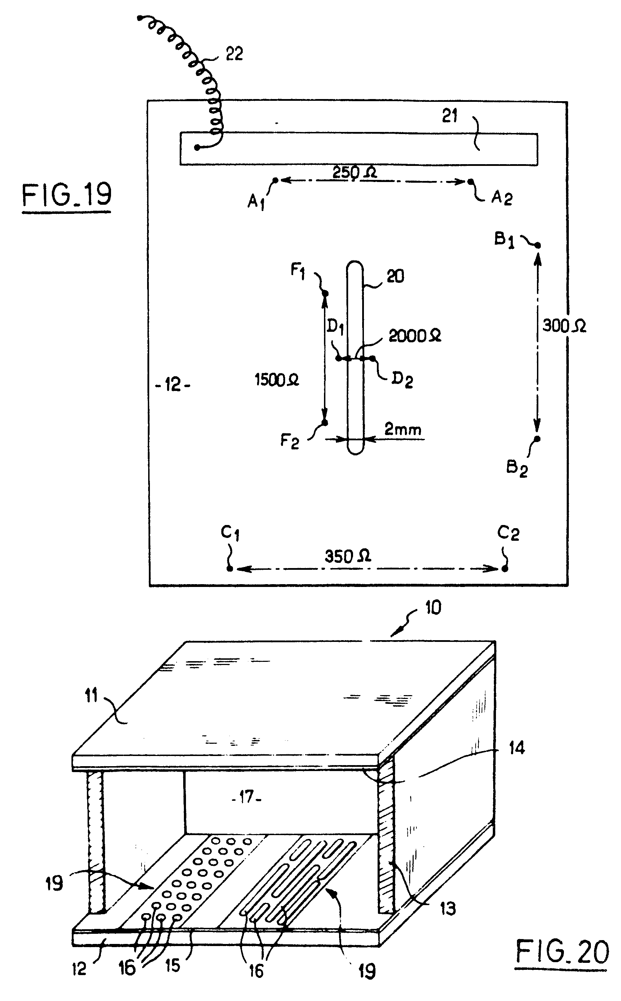

Le résultat de ces mesures est illustré schématiquement sur la figure 19.

Sur cette figure, on a référencé schématiquement 20 la zone de contact de la lame d'aluminium sur la couche conductrice d'oxydes d'étain et d'indium. Les paires de points de mesure de la résistance électrique sont référencées schématiquement et respectivement $A_1$, $A_2$ ; $B_1$, $B_2$ ; $C_1$, $C_2$ ; $D_1$, $D_2$ ; $F_1$, $F_2$. Les valeurs des résistances mesurées entre ces paires de points sont indiquées sur la figure 19. On constate que la résistance électrique croît progressivement jusqu'à devenir presque infinie au niveau de la zone de contact précédemment établie entre la couche conductrice d'oxydes d'étain et d'indium et la lame d'aluminium. En d'autres termes, on obtient ainsi un gradient de résistance électrique sur la couche d'oxydes d'étain et d'indium.

Après séchage et fixation d'un fil de jonction 22 pour l'excitation électrique à l'aide de laque d'argent 21, la cellule électrooptique est confectionnée comme suit. La plaque 12 présentant le gradient de résistance électrique précité obtenu par réduction de la couche d'oxydes d'étain et d'indium et la plaque conductrice 11 intacte sont séparées par une cale de 6μm en mylar. Un cristal liquide type 5CB est Introduit par capillarité dans le volume étanche défini par les plaques 11, 12 et la cale 13. Après application d'une tension de l'ordre de quelques volts l'échantillon devient homéotrope. On l'observe entre polariseurs croisés.

Après application d'une tension d'excitation d'une fréquence variable allant de 1Hz à 7MHz on observe l'apparition d'une auréole lumineuse formée plus précisément de deux bandes étroites séparées de 0,15 à 0,20mm selon la fréquence d'excitation et se rejoignant par deux bandes semi-circulaires, c'est-à-dire une auréole de forme sensiblement homologue du contour de la lame d'aluminium utilisée pour la réduction de la couche conductrice d'oxyde, d'étain et d'indium.

Deux types de mesures réalisées sur cette cellule sont précisés dans le tableau ci-dessous. la première colonne à gauche de ce tableau précise les fréquences d'excitation correspondant aux différents relevés de mesures.

La deuxième colonne précise en Volts la valeur de la tension d'excitation correspondant au seuil d'instabilité, c'est-à-dire à l'apparition de l'auréole lumineuse.

La troisième colonne précise, en unités arbitraires, l'écartement des bandes rectilignes d'instabilité en fonction des fréquences d'excitation.

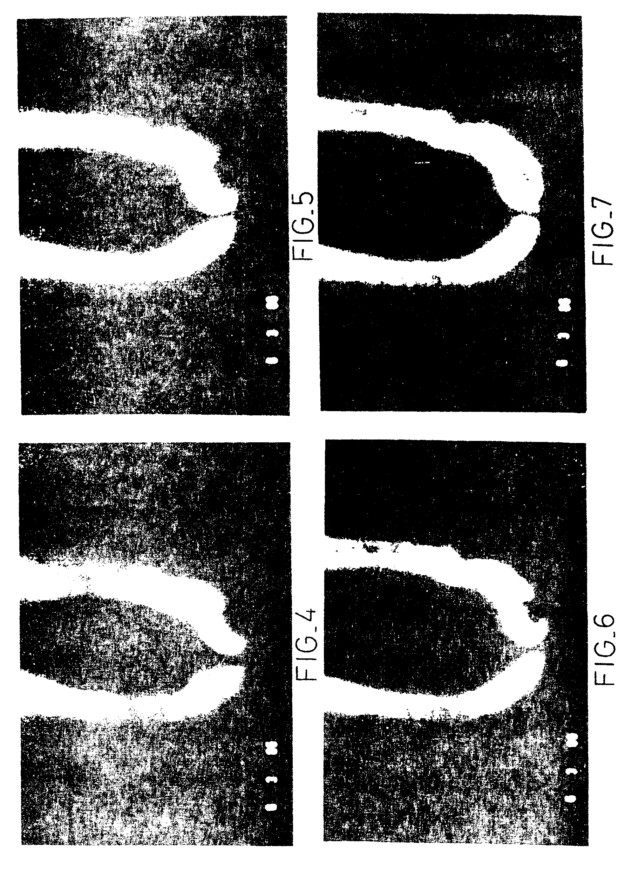

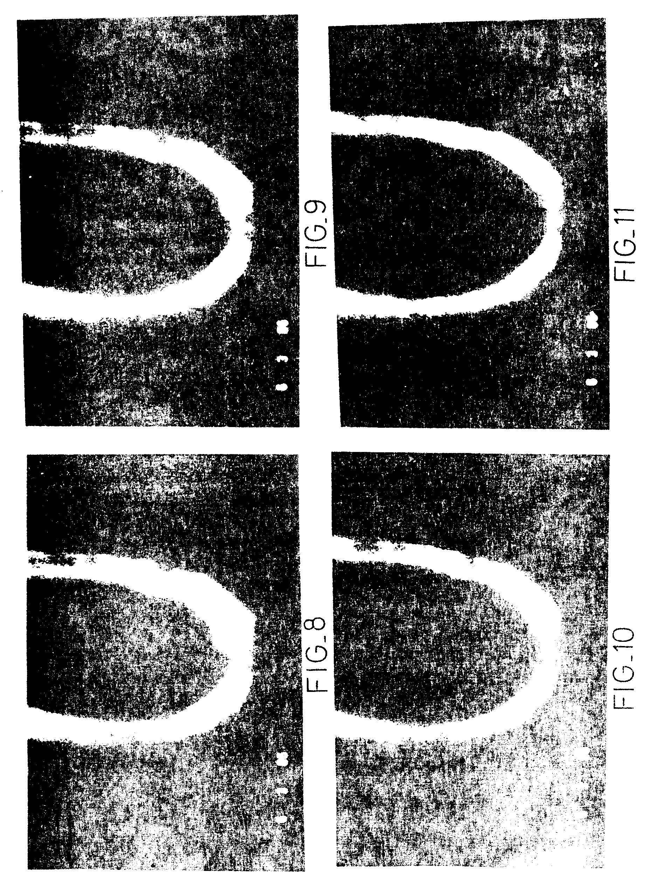

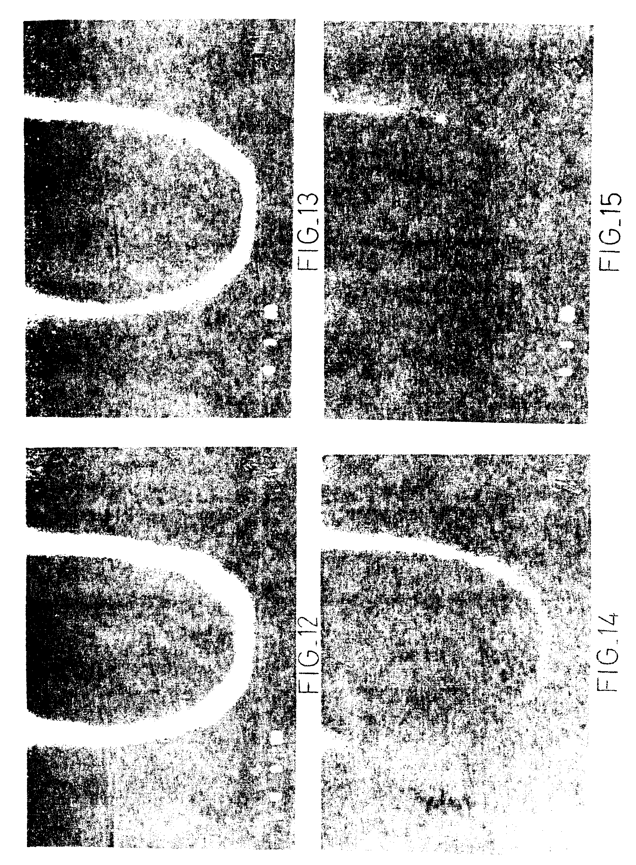

Enfin, la quatrième colonne sur la droite du tableau 1 précise les numéros des photographies illustrées respectivement sur les figures 4 à 15.

TABLEAU 1

| Fréquence | Tension-seuil (Volt) | Ecartement (unité) arbitraires) | Photo n° |
|---|---|---|---|
| 10 Hz | 0,8 | | |
| 100 Hz | 0,8 | | |
| 300 Hz | 0,8 | | |
| 1 kHz | 0,8 | | |
| 10 kHz | 0,8 | 40 | FIG. 4 |
| 50 kHz | 0,8 | 42 | FIG. 5 |
| 100 kHz | 0,8 | 45 | FIG. 6 |
| 200 kHz | 0,9 | 47 | FIG. 7 |
| 500 kHz | 1,0 | 49 | FIG. 8 |
| 800 kHz | | 51 | FIG. 9 |
| 1 MHz | 1,4 | 53 | FIG. 10 |
| 2 MHz | | 55 | FIG. 11 |
| 3 MHz | 3,0 | 59 | FIG. 12 |
| 4 MHz | | 62 | FIG. 13 |
| 5 MHz | 3,9 | 64 | FIG. 14 |
| 6 MHz | | 65 | FIG. 15 |

On constate, à l'examen du tableau ci-dessus et des figures 4 à 15 que l'écartement entre les bandes rectilignes d'instabilité augmente en fonction de la fréquence d'excitation. Ce résultat sera expliquè par la suite.

Pour expliquer le phénomène mis en oeuvre par la présente invention, on se référera maintenant à la figure 17.

On a représenté sur cette figure 17 une cellule 10 similaire à celle représentée sur la figure 16, comprenant deux plaques transparentes 11, 12, parallèles et revêtues d'électrodes 14, 15. Les plaques 11, 12 sont séparées par une cale 13. La cellule contient un cristal liquide 17. L'une des électrodes 15 possède une zone 16 de variation de résistance. On supposera pour faciliter les explications qui vont suivre qu'il s'agit d'une augmentation progressive de résistance de la périphérie de la zone 16 vers le centre de celle-ci.

On considèrera maintenant deux G et H sur l'électrode 15 ; un premier point G est situé sensiblement au centre de la zone 16 de variation de résistance contrôlée du revêtement ; le second point H est situé sur le même revêtement, à l'extérieur de la zone 16, par exemple sur le pourtour de celle-ci. Enfin, on considèrera un troisième point J placé sur l'autre revêtement 14 et situé sur une normale aux revêtements 14, 15 passant par le premier point G.

L'impédance entre le premier et le second point G, H, essentiellement résistive est illustrée schématiquement par une résistance référencée R sur la figure 17.

L'impédance, essentiellement capacitive, entre le premier et le troisième point G, J est illustrée schématiquement par une capacité référencée $C_0$ sur la figure 17.

Enfin, l'impédance, essentiellement capacitive, entre le deuxième et le troisième point H, J est illustrée schématiquement par une capacité référencée $C_i$ sur la figure 17.

On sait que les capacités $C_0$ et $C_i$ entre le troisième point J et respectivement le premier point G et le second point H sont inversement prorportionnelles à la distance séparant ces paires de points. En conséquence, l'impédance diélectrique $(1/C_i)$ entre le troisième point J et le deuxième point H est toujours supérieure a l'impédance diélectrique $(1/C_0)$ entre le troisième point J et le premier point G. Par ailleurs, ces impédances diminuent lorsque la fréquence d'excitation augmente.

Pour une fréquence d'excitation relativement faible, la somme de l'impédance diélectrique entre le troisième et le premier points,G et J, et de l'impédance du revêtement (R) entre le second et le premier points, H et G, sera inférieure à l'impédance diélectrique entre le troisième et le second points, J et H.

Les charges sont alors réparties de façon sensiblement uniforme sur i'électrode 15 malgré la présence de la zone 16 possédant une variation d'impédance.

La fréquence d'excitation augmentant les impédances diélectriques entre le troisième et respectivement le premier et le second points, G et H, vont diminuer.

Pour une fréquence qui sera dite fréquence critique d'instabilité dans la présente demande de brevet, la somme de l'impédance diélectrique entre le troisième et le premier points, J et G, et de l'impédance du revêtement entre le premier et le second points, G et H, sera égale à l'impédance diélectrique entre le second et le troisième points J et H. On obtient alors une répartition non uniforme des charges sur le revêtement 15, la zone 16 de plus grande impédance de ce revêtement étant appauvrie en charges.

De ce fait, au voisinage de la plaque 12 possédant la zone 16 de variation d'impédance, au niveau des points H répondant à l'égalité d'impédance précitée, les lignes de champ électrique Sont inclinées vers le centre de la zone 16. Plus précisément, dans l'épaisseur de la cellule, les lignes de champ électrique sont incurvées, en se rapprochant du centre de la zone 16 à proximité de la plaque 12 pour arriver sur la plaque 11 opposée sensiblement perpendiculairement à celle-ci.

Lorsque la fréquence d'excitation augmente encore, compte-tenu de la diminution correspondante de l'impédance diélectrique capacitive entre le troisième point J et les premier et second points, G et H, le phéonomène d'instabilité précité sera obtenu pour des valeurs d'impédance encore plus faible entre les premier et second points G et H, c'est-à-dire pour des lieux de second point H encore plus éloignés du centre de la zone 16 à gradient de résistance électrique (c'est-à-dire des lieux de second point H correspondant à une variation d'impédance plus faible).

En d'autres termes, la capacité intrinsèque C de la cellule et la résistance contrôlée R en surface de l'électrode définissent un temps de relaxation RC permettant de définir la fréquence critique d'instabilité par sa pulsation $\omega_c$ telle que : $\omega_c RC = 1$, en considérant que R représente la résistance par unité carrée au niveau des zones de variation d'impédance et que C représente la capacité d'un élément de cellule, entre les plaques 11, 12, formé d'un cube dont chaque côté égale la distance séparant les deux plaques 11, 12.

Lorsque la pulsation $\omega$ du signal d'excitation généré par les moyens 30 est supérieure à la pulsation critique d'instabilité $\omega_c$, le champ est oblique au niveau des plages 16 de variation d'impédance. Lorsque la pulsation $\omega$ est inférieure à la pulsation critique d'instabilité $\omega_c$, le champ est normal aux plaques.

Ce phénomène est clairement révélé par les figures 4 à 15 qui montrent que l'écartement entre les zones rectilignes d'instabilité (correspondant aux lieux des seconds points H) augmente avec la fréquence d'excitation lorsque les zones 16 de variation d'impédance présentent un gradient d'impédance.

En conséquence, le procédé d'utilisation du dispositif électrooptique à cristaux liquides conforme a la présente invention comprend pour l'essentiel l'étape consistant à appliquer entre les deux électrodes 11, 12 prévues respectivement sur les plaques, une tension électrique alternative d'excitation dont la fréquence est supérieure à une fréquence critique d'instabilité pour laquelle, en considérant un premier point G sur une zone de variation d'impédance contrôlée d'un revêtement 12, un second point H sur le même revêtement à l'extérieur de la zone, et un troisième point J placé sur l'autre revêtement et situé sur une normale au revêtement passant par le premier point, l'impédance diélectrique $(1/C_i)$ essentiellement capacitive entre le second et le troisième points, H et J, est égale à la somme de l'impédance diélectrique $(1/C_0)$ entre le troisième et le premier points, J et G, et de l'impédance entre le premier et le second points, G et H.

Selon une autre caractéristique avantageuse de l'invention, pour supprimer l'effet de biréfringence obtenu lors de l'application de la tension électrique d'excitation à une fréquence supérieure à la fréquence critique d'instabilité précitée, le procédé d'utilisation comprend avantageusement l'étape consistant à appliquer entre les électrodes une tension électrique d'inhibition d'une fréquence inférieure à la fréquence critique.

En effet, lors de l'application d'une telle tension électrique d'inhibition d'une fréquence inférieure à la fréquence critique, les lignes de champ électrique redeviennent parfaitement perpendiculaires aux plaques 11, 12 pour définir un alignement homogène des molécules du cristal liquide en raison du couplage entre le champ électrique et l'anisotropie diélectrique des molécules.

L'application d'une tension électrique d'inhibition d'une fréquence inférieure à la fréquence critique d'instabilité permet bien entendu d'obtenir une suppression de l'effet de biréfringence très rapide eten tout cas plus rapide que si la tension d'excitation était simplement interrompue, auquel cas la suppression de l'effet de biréfrigence dépendrait du temps de relaxation lié à l'élasticité de courbure des molécules.

Bien entendu, dans le cas où les zones choisies de l'électrode possèdent une impédance infinie, obtenue par exemple par gravure complète, la fréquence critique d'excitation est nulle. Il suffit alors d'appliquer une tension électrique continue entre les électrodes pour obtenir un champ électrique oblique par rapport à une normale aux électrodes. Dans cette hypothèse d'impédance infinie au niveau des zones choisies, dans la mesure où la fréquence critique est nulle, on ne peut appliquer une tension électrique d'inhibition de fréquence inférieure. Pour supprimer l'effet de biréfringence il faut alors supprimer la tension alternative d'excitation.

Pour afficher des caractères alphanumériques à l'aide d'une cellule électrooptique à cristaux liquides conforme à la présente invention, il suffit de réaliser sur l'une des électrodes 15 de la cellule une série de plages présentant une variation d'impédance en surface, qui reproduit les caractères alphanumériques à afficher, par exemple de réaliser la gravure de matrices de points ou de lignes sur chacune de ces plages 19 d'électrode, comme illustré schématiquement sur la figure 20.

Comme l'effet d'inclinaison apparaît sur une largeur égale à l'épaisseur de la cellule, cette matrice de points ou de lignes aura un pas latéral comparable à ladite épaisseur de la cellule. On remarquera donc que l'illustration de la figure 20 n'est pas représentée à l'échelle, l'épaisseur de la cellule séparant les électrodes 14 et 15 étant dans la pratique, comme indiqué ci-dessus, de l'ordre de grandeur du pas des points ou des lignes gravés sur les plages 19.

Lorsqu'une tension d'excitation d'une fréquence supérieure à la fréquence critique d'instabilité et d'amplitude supérieure au seuil sera appliquée aux bornes de la cellule, celle-ci affichera le caractère alphanumérique défini par les plages 19 excitées présentant une variation d'impédance contrôlée.

Pour effacer ce caractère affiché, il suffit d'appliquer sur les plages précitées une tension d'excitation d'une fréquence inférieure à la fréquence critique d'instabilité, ou de supprimer la tension d'excitation.

Pour permettre d'afficher différents caractères alphanumériques à l'aide d'un même dispositif électrooptique, il convient de diviser l'électrode 15 en plusieurs plages 19 séparées et d'appliquer sélectivement la tension d'excitation sur ces plages.

En effet seules les zones 16 placées sur des plages 19 d'électrode recevant une tension d'excitation de fréquence supérieure à la fréquence critique d'instabilité et d'amplitude supérieure au seuil apparaitront lumineuses.

Les différentes zones ou plages à exciter de l'électrode 15 peuvent présenter des fréquences critiques différentes, ce qui permet un affichage sélectif en contrôlant la fréquence d'excitation.

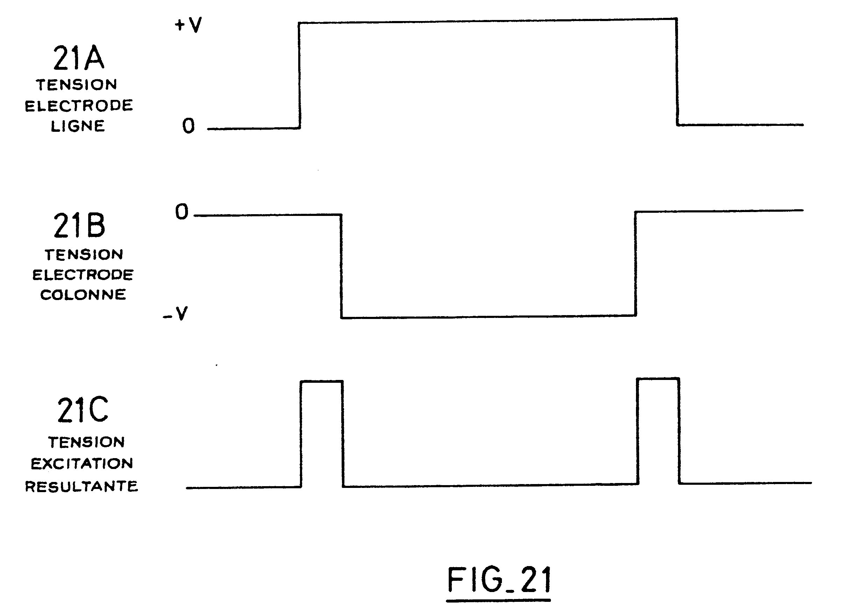

On a représenté schématiquement sur la figure 21 un exemple de signaux d'excitation appliqués respectivement sur les électrodes d'une cellule conforme à la présente invention, de façon avantageuse respectivement sur des électrodes de ligne et de colonne.

La figure 21 montre que la tension d'excitation appliquée sur une zone 16 de variation contrôlée d'impédance peut être formée par superposition de deux signaux basse fréquence appliqués respectivement sur les électrodes et dont le déphasage fait apparaître des composantes hautes fréquences.

Les signaux représentés sur la figure 21 ne sont donnés qu'à titre d'illustration non limitative.

Bien entendu, la présente invention n'est pas limitée aux exemples de réalisation qui viennent d'être décrits mais s'étend à toutes variantes conformes à son esprit.

On a indiqué précédemment que l'effet de biréfringence est mis en évidence pour une fréquence d'excitation supérieure à la fréquence critique d'instabilité et supprimé pour une fréquence d'excitation inférieure à la fréquence critique d'instabilité. Ce cas correspond à l'utilisation de polariseurs croisés en regard des plaques 11, 12. Une disposition inverse peut être obtenue en utilisant des polariseurs non croisés ou encore des cristaux liquides à anisotropie diélectrique négative.

## Revendications

**1.** Procédé de fabrication d'une cellule à cristaux liquides comprenant les étapes qui consistent à placer un cristal liquide nématique (17) entre deux plaques transparentes parallèles (11, 12) revêtues sur leurs faces internes en regard d'un revêtement conducteur formant électrode (14, 15) et à intercaler une cale (13) entre les plaques, caractérisé par le fait qu'il comprend l'étape additionnelle consistant à modifier l'impédance, de façon contrôlée, en surface de l'un au moins des revêtements formant électrode sur des zones (16) choisies de celui-ci.

2. Procédé selon la revendication 1, caractérisé par le fait que les variations contrôlées d'impédance en surface de l'un au moins des revêtements formant électrode (15) sont réalisées par altération ce l'impédance intrinsèque du revêtement conducteur formant électrode.

3. Procédé selon l'une des revendications 1 ou 2, caractérisé par le fait que l'étape consistant à définir des variations contrôlées d'impédance en surface de l'un au moins des revêtements formant électrode est réalisée :
   - en déposant une couche régulière de revêtement conducteur homogène (15) sur l'une des plaques (12), puis
   - en modifiant l'impédance en surface du revêtement sur des zones choisies (16) de celui-ci, par réaction chimique.

4. Procédé selon la revendication 3, caractérisé par le fait que l'étape consistant à définir des variations contrôlées d'impédance en surface de l'un au moins des revêtements formant électrode est réalisée :
   - en déposant une couche régulière d'un revêtement électriquement conducteur (15) d'oxydes d'étain et d'indium, sur l'une des plaques (12), puis
   - en assurant, par réaction chimique, sur des zones choisies (16) du revêtement, une réduction au moins partielle des oxydes d'étain et d'indium.

5. Procédé selon l'une des revendications 1 et 2, caractérisé par le fait que l'étape consistant à définir des variations contrôles d'impédance en surface de l'un au moins des revêtements formant électrode est réalisée :
   - en déposant une couche régulière de revêtement conducteur homogène (15) sur l'une des plaques (12), puis
   - en assurant une gravure mécanique du revêtement sur des zones choisies (16) de celui-ci.

6. Procédé selon la revendication 1, caractérisé par le fait que les variations contrôlées d'impédance en surface de l'un au moins des revêtements formant électrode sont réalisées en déposant sur des zones choisies (16) du revêtement électriquement conducteur, une couche de recouvrement en un matériau présentant une conductibilité électrique différente de celle du revêtement.

7. Procédé selon l'une des revendications 1 à 6, caractérisé par le fait que l'étape de modification d'impédance en surface de l'un au moins des revêtements formant électrode cousiste à définir une variation progressive d'impédance de la périphérie des zones choisies (16) vers le centre de celles-ci.

8. Procédé selon l'une des revendications 1 à 6, caractérisé par le fait que l'étape de modification d'impédance en surface de l'un au moins des revêtements formant électrode consiste à définir une variation brusque d'impédance lors du franchissement de la délimitation des zones choisies (16).

9. Dispositif électrooptique à cristaux liquides obtenu par la mise en oeuvre du procédé conforme à l'une des revendications 1 à 8, comprenant deux plaques transparentes parallèles (11, 12) revêtues chacune sur l'une de leurs faces d'un revêtement conducteur (15) formant électrode, une cale (13) intercalée entre les plaques, et une couche de cristal liquide nématique (17) intercalée entre lesdites plaques, caractérisé par le fait que l'un au moins des revêtements conducteurs présente, sur des zones choisie (16), des variations contrôlées d'impédance en surface et que le dispositif comprend en outre des moyens (30) adaptés pour appliquer entre les électrodes (14, 15) prévues respectivement sur les plaques (11, 12) une tension électrique d'excitation de fréquence variable.

10. Dispositif électrooptique selon la revendication 9, caractérisé par le fait que le cristal liquide nématique possède une forte anisotropie diélectrique positive.

11. Dispositif électrooptique selon la revendication 10, caractérisé par le fait que le cristal liquide nématique comprend des corps de la famille des cyanobiphényls.

12. Dispositif électrooptique selon la revendication 9, caractérisé par le fait que le cristal liquide nématique possède une forte anisotropie diélectrique négative.

**13.** Dispositif électrooptique selon l'une des revendications 9 à 12, caractérisé par le fait que les zones (16) présentant des variations contrôlées d'impédance sont réparties sur des plages isolées du revêtement formant électrode.

**14.** Utilisation du dispositif électrooptique conforme à l'une des revendications 9 à 13, caractérisée par le fait qu'elle comprend l'étape consistant à appliquer entre les électrodes (14, 15) prévues respectivement sur les plaques (11, 12) une tension électrique d'excitation de fréquence variable.

**15.** Utilisation selon la revendication 14, caractérisée par le fait qu'elle comprend l'étape consistant à appliquer entre les deux électrodes (14, 15) prévues respectivement sur les plaques (11, 12), une tension électrique alternative d'excitation dont la fréquence est alternativement supérieure et inférieure à une fréquence critique d'instabilité pour laquelle, en considérant un premier point (G) sur une zone (16) de variation d'impédance contrôlée d'un revêtement, un second point (H) sur le même revêtement à l'extérieur de la zone, et un troisième point (J) placé sur l'autre revêtement et situé sur une normale aux revêtements passant pr le premier point, l'impédance diélectrique essentiellement capacitive ($1/C_i$), entre le second (H) et le troisième (J) points est égale à la somme de l'impédance diélectrique ($1/C_0$) entre le troisième (J) et le premier (G) points et de l'impédance (R) entre le second (H) et le premier (G) points.

**16.** Utilisation selon l'une des revendications 14 ou 15, caractérisée par le fait que la tension d'excitation appliquée sur des zones de variation contrôlée d'impédance est formée par superposition de deux signaux basse fréquence appliqués respectivement sur les électrodes dont le déphasage fait apparaître des composantes hautes fréquences.

**17.** Utilisation selon l'une des revendications 14 à 16, caractérisée par le fait qu'elle comprend l'étape consistant à appliquer entre les deux électrodes une tension électrique alternative d'excitation dont la fréquence est alternativement supérieure et inférieure à une fréquence critique d'instabilité dont la pulsation $\omega c$ est définie par la relation :

$\omega_c RC = 1$ dans laquelle

R désigne la résistance carrée au niveau des zones de variation contrôlée d'impédance et C désigne la capacité d'un élément de la cellule composée de molécules nématiques, sous forme de cubes dont les côtés sont égaux à la distance séparant les deux plaques transparentes.

**Claims**

**1.** Process for the manufacture of a liquid crystal cell comprising stages which consist of placing a nematic liquid crystal (17) between two parallel transparent plates (11, 12) which are coated on their opposing internal surfaces with a conducting electrode-forming coating (14, 15) and inserting a wedge (13) between the plates, characterized in that it comprises the additional stage which consists of modifying the impedance, in a controlled manner, at the surface of at least one of the electrode-forming coatings in selected zones (16) of that coating.

**2.** Process according to Claim 1, characterized in that the controlled variations in impedance at the surface of at least one of the electrode-forming coatings (15) are achieved by changing the intrinsic impedance of the conducting electrode-forming coating.

**3.** Process according to one of Claims 1 or 2, characterized in that the stage which consists of defining the controlled variations in impedance at the surface of at least one of the electrode-forming coatings is carried out :
   - by depositing a uniform layer of homogenous conducting coating (15) on one of the plates (12) and then
   - modifying the impedance at the surface of the coating in selected zones (16) of it, by chemical reaction.

**4.** Process according to Claim 3, characterized in that the stage which consists of defining the controlled variations in impedance at the surface of at least one of the electrode-forming coatings is carried out :

- by depositing a uniform layer of an electrically conducting coating (15) of tin and indium oxides on one of the plates (12) and then
- ensuring, by chemical reaction, on the selected zones (16) of the coating, an at least partial reduction of the tin and indium oxides.

5. Process according to one of Claims 1 and 2, characterized in that the stage which consists of defining the controlled variations in impedance at the surface of at least one of the electrode-forming coatings is carried out :
- by depositing a uniform layer of homogeneous conducting coating (15) on one of the plates (12) and then
- mechanically engraving the coating in selected zones (16) of that coating.

6. Process according to Claim 1, characterized in that the controlled variations in impedance at the surface of at least one of the electrode-forming coatings are achieved by depositing on the selected zones (16) of the electrically conducting coating a covering layer of a material whose electrical conductivity is different from that of the coating.

7. Process according to one of Claims 1 to 6, characterized in that the stage of impedance modification at the surface of at least one of the electrode-forming coatings consists of defining a gradual variation in impedance from the periphery of the selected zones (16) towards the centre of them.

8. Process according to one of Claims 1 to 6, characterized in that the stage of impedance modification at the surface of at least one of the electrode-forming coatings consists of defining a sudden variation in impedance when the boundary of the selected zones (16) is crossed.

9. Electro-optical liquid crystal device obtained by implementing the process according to one of Claims 1 to 8, comprising two parallel transparent plates (11, 12) each coated on one of their sides with a conducting electrode-forming coating (15), a wedge (13) inserted between the plates and a layer of nematic liquid crystal (17) inserted between the said plates, characterized in that at least one of the conducting coatings has, in the selected zones (16), controlled variations in impedance at the surface and that the device also comprises means (30) suitable for applying an electrical excitation voltage of variable frequency between the electrodes (14, 15) provided respectively on the plates (11, 12).

10. Electro-optical device according to Claim 9, characterized in that the nematic liquid crystal has a strong positive dielectric anisotropy.

11. Electro-optical device according to Claim 10, characterized in that the nematic liquid crystal comprises substances from the cyanodiphenyl family.

12. Electro-optical device according to Claim 9, characterized in that the nematic liquid crystal has a strong negative dielectric anisotropy.

13. Electro-optical device according to one of Claims 9 to 12, characterized in that the zones (16) which have controlled variations in impedance are distributed over isolated areas of the electrode-forming coating.

14. Use of the electro-optical device according to one of Claims 9 to 13, characterized in that it comprises the stage which consists of applying an electrical excitation voltage of variable frequency between the electrodes (14, 15) provided respectively on the plates (11, 12).

15. Use according to Claim 14, characterized in that it comprises the stage which consists of applying between the two electrodes (14, 15) provided respectively on the plates (11, 12) an AC electrical excitation voltage whose frequency is alternately higher and lower than a critical instability frequency in respect of which, taking a first point (G) on a zone (16) of controlled variation in impedance of a coating, a second point (H) on the same coating outside the zone and a third point (J) placed on the other coating and located on a perpendicular to the coatings passing through the first point, the essentially capacitive dielectric impedance ($1/C_i$), between the second (H) and third (J) points is equal to the sum of the dielectric impedance ($1/C_0$) between the third (J) and the first (G) points and the impedance (R) between the second (H) and the first (G) points.

16. Use according to one of Claims 14 or 15, characterized in that the excitation voltage applied to the zones of controlled variation in impedance is formed by superimposing two low frequency signals applied respectively to the electrodes, the phase displacement of which reveals high frequency components.

17. Use according to one of Claims 14 to 16, characterized in that it comprises the stage which consists of applying between the two electrodes an electrical AC excitation voltage whose frequency is alternately higher and lower than a critical instability frequency whose pulsatance $\omega c$ is defined by the equation :

$\omega_c RC = 1$, where

R designates the resistance squared at the zones of controlled variation in impedance and C designates the capacitance of an element of the cell composed of nematic molecules, in the form of cubes, the sides of which are equal to the distance which separates the two transparent plates.

**Patentansprüche**

1. Verfahren zum Herstellen einer Zelle mit Flüssigkristallen, mit den Schritten, die darin bestehen, einen nematischen Flüssigkristall (17) zwischen zwei transparente parellele Platten (11, 12), die auf ihren Innenflächen gegenüberliegend mit einem leitenden Überzug überzogen sind, der eine Elektrode (14, 15) bildet, anzuordnen und einen Keil (13) zwischen die Platten zu legen, dadurch gekennzeichnet, daß es den zusätzlichen Schritt aufweist, der darin besteht, die Impedanz, auf gesteuerte Weise, in der Fläche eines wenigstens der Überzüge, die die Elektrode bilden, in auf ihm gewählten Bereichen (16) zu modifizieren.

2. Verfahren nach Anspruch 1, dadurch gekennzeichnet, daß die gesteuerten Änderungen der Impedanz in der Fläche eines wenigstens der Überzüge, die die Elektrode (15) bilden, durch Änderung der intrinsischen Impedanz des leitenden Überzuges, der eine Elektrode bildet, hergestellt werden.

3. Verfahren nach einem der Ansprüche 1 oder 2, dadurch gekennzeichnet, daß der Schritt, der darin besteht, die gesteuerten Änderungen der Impedanz in der Fläche eines wenigstens der Überzüge, der die Elektrode bildet, realisiert wird:
   - indem eine regelmäßige Schicht eines leitenden homogenen Überzuges (15) auf eine der Platten (12) abgelagert wird, dann
   - indem die Impedanz in der Fläche des Überzuges in dessen gewählten Bereichen (16) durch chemische Reaktion modifiziert wird.

4. Verfahren nach Anspruch 3, dadurch gekennzeichnet, daß der Schritt, der darin besteht, die gesteuerten Änderungen der Impedanz in der Fläche des einen der Überzüge, die die Elektrode bilden, zu definieren, realisiert wird:
   - indem eine regelmäßige Schicht eines leitenden elektrischen Überzuges (15) aus Oxyden von Zinn und Indium auf einer der Platten (12) abgelagert wird, dann
   - indem, durch chemische Reaktion in den gewählten Bereichen (16) des Überzuges eine zumindest teilweise Reduktion der Oxyde von Zinn und Indium sichergestellt wird.

5. Verfahren nach einem der Ansprüche 1 und 2, dadurch gekennzeichnet, daß der Schritt, der darin besteht, die gesteuerten Änderungen der Impedanz in der Fläche eines wenigstens der Überzüge, die die Elektrode bilden, zu definieren, hergestellt wird:
   - indem eine regelmäßige Schicht eines homogenen leitenden Überzuges (15) auf einer der Platten (12) abgelagert wird, dann
   - indem eine mechanische Gravur des Überzuges in den gewählten Bereichen (16) derselben sichergestellt wird.

6. Verfahren nach Anspruch 1, dadurch gekennzeichnet, daß die gesteuerten Änderungen der Impedanz in der Fläche eines wenigsten der Überzüge, die die Elektrode bilden, hergestellt werden, indem man auf den gewählten Bereichen (16) des elektrisch leitenden Überzuges eine Deckschicht aus einem Material ablagert, das eine elektrische Leitfähigkeit unterschiedlich von der des Überzuges zeigt.

7. Verfahren nach einem der Ansprüche 1 bis 6, dadurch gekennzeichnet, daß der Schritt der Änderung der Impedanz in der Fläche eines wenigstens der Überzüge, der die Elektrode bildet, darin besteht, eine progressive Änderung der Impedanz von der Peripherie der gewählten Bereiche (16) in Richtung auf deren Zentrum zu definieren.

8. Verfahren nach einem der Ansprüche 1 bis 6, dadurch gekennzeichnet, daß der Schritt des Änderns der Impedanz in der Fläche eines wenigstens der Überzüge, die die Elektrode bilden, darin besteht, eine plötzliche Änderung der Impedanz beim Übergang der Begrenzung der gewählten Bereiche (16) zu definieren.

9. Elektrooptische Vorrichtung mit Flüssigkristallen, erhalten durch das Anwenden des Verfahrens nach einem der Ansprüche 1 bis 8, mit zwei transparenten parellelen Platten (11, 12), die jede auf einer ihrer Flächen mit einem leitenden Überzug (15), der eine Elektrode bildet, versehen sind, wobei ein Keil (13) zwischen den Platten angeordnet ist und eine Schicht aus nematischem Flüssigkristall (17) zwischen den Platten angeordnet ist, dadurch gekennzeichnet, daß der eine wenigstens der leitenden Überzüge in den gewählten Bereichen (16) gesteuerte Änderungen der Impedanz in der Fläche zeigt und daß die Vorrichtung weiterhin Einrichtungen (30) aufweist, die dazu ausgelegt sind, zwischen den Elektroden (14, 15), die jeweils auf den Platten (11, 12) vorgesehen sind, eine elektrische Anregungsspannung variabler Frequenz anzulegen.

10. Elektrooptische Vorrichtung nach Anspruch 9, dadurch gekennzeichnet, daß der nematische Flüssigkristall eine starke positive dielektrische Anisotropie besitzt.

11. Elektrooptische Vorrichtung nach Anspruch 10, dadurch gekennzeichnet, daß der nematische Flüssigkristall Körper aus der Familie der Cyano-Diphenyle aufweist.

12. Elektrooptische Vorrichtung nach Anspruch 9, dadurch gekennzeichnet, daß der nematische Flussigkristall eine starke negative dielektrische Anisotropie zeigt.

13. Elektrooptische Vorrichtung nach einem der Ansprüche 9 bis 12, dadurch gekennzeichnet, daß die Bereiche (16), die die gesteuerten Änderungen der Impedanz zeigen, auf isolierten Bereichen des Überzuges, der die Elektrode bildet, verteilt sind.

14. Verwendung der elektrooptischen Vorrichtung nach einem der Ansprüche 9 bis 13, dadurch gekennzeichnet, daß sie den Schritt umfaßt, der darin besteht, zwischen den Elektroden (14, 15), die jeweils auf den Platten (11, 12) vorgesehen sind, eine elektrische Anregungsspannung von variabler Frequenz anzulegen.

15. Verwendung nach Anspruch 14, dadurch gekennzeichnet, daß sie den Schritt umfaßt, der darin besteht, zwischen den beiden Elektroden (14, 15), die jeweils auf den Platten (11, 12) vorgesehen sind, eine elektrische Wechselspannung der Anregung anzulegen, deren Frequenz wechselweise höher oder niedriger als eine kritische Frequenz der Instabilität ist, für die, wenn man einen ersten Punkt (G) in einem Bereich (16) gesteuerter Änderung der Impedanz eines Überzuges betrachtet, einen zweiten Punkt (H) auf dem selben Überzug außerhalb des Bereiches und einen dritten Punkt (J), der sich auf dem anderen Überzug befindet und auf einer Normale zu den Überzügen gelegen ist, die durch den ersten Punkt läuft, die dielektrische Impedanz, die im wesentlichen kapazitiver Art ist $(1/C_i)$, zwischen dem zweiten (H) und dem dritten (J) Punkt, gleich der Summe der dielektrischen Impedanz $(1/C_0)$ zwischen dem dritten (J) und dem ersten (G) Punkt und der Impedanz (R) zwischen dem zweiten (H) und dem ersten (G) Punkt ist.

16. Verwendung nach einem der Ansprüche 14 oder 15, dadurch gekennzeichnet, daß die Anregungsspannung, die an die Bereiche gesteuerter Änderung der Impedanz angelegt ist, durch Überlagerung zweier Niederfrequenzsignale gebildet wird, die jeweils auf die Elektroden aufgegeben werden, deren Phasenfehler die hochfrequenten Bestandteile erscheinen läßt.

**17.** Verwendung nach einem der Ansprüche 14 bis 16, dadurch gekennzeichnet, daß sie den Schritt umfaßt, der darin besteht, zwischen die beiden Elektroden eine elektrische Wechselspannung der Anregung zu legen, deren Frequenz abwechselnd höher und niedriger als eine kritische Frequenz der Instabilität ist, deren Pulsierung wc durch die Beziehung:

$$w_c RC = 1$$

definiert ist, wobei R den quadratischen Widerstand auf der Höhe der Bereiche der kontrollierten Änderung der Impedanz bezeichnet und C die Kapazität eines Elementes der Zelle bezeichnet, die aus nematischen Molekülen zusammengesetzt ist, in Form von würfeln, deren Seiten gleich der Entfernung ist, die die beiden transparenten Platten trennt.

EP 0 248 698 B1

FIG 2

FIG 3

FIG 1

FIG.4

FIG.5

FIG_6

FIG_7

FIG_8

FIG_9

FIG_10

FIG_11

EP 0 248 698 B1

FIG_12

FIG_13

FIG_14

FIG_15

FIG.16

FIG.17

Valeur de la tension d'excitation en fonction de la fréquence d'excitation, correspondant au seuil d'éclairement.

FIG_18

effet total (frange marron)

2ème cellule ancrage fort

1ère cellule ancrage faible

6µ

6µ

65µ

20µ

Hz

FREQUENCE TENSION EXCITATION

EP 0 248 698 B1

FIG.19

FIG.20

**21A**
TENSION
ELECTRODE
LIGNE

+V

0

**21B**
TENSION
ELECTRODE
COLONNE

0

-V

**21C**
TENSION
EXCITATION
RESULTANTE

## FIG_21

EP 0 248 698 B1